# EUROPEAN PATENT APPLICATION

(11) **EP 2 050 696 A1**
(43) Date of publication of application: **22.04.2009**
(21) Application number: 08166552.3
(22) Date of filing: 14.10.2008
(51) Int. Cl.: B65G 21/18

(54) **Spiral conveyor with a conveyor chain having a return path along the same track of the outward path.**

(30) Priority: 17.10.2007 IT MI20072005
(71) Applicant: Pneumelectric Automazione s.r.l., 20129 Milano (IT)
(72) Inventor: Cavelli, Stefano, 14049 Nizza Monferrato (AT) (IT)
(74) Representative: Mittler, Enrico

(57) **Abstract**

A spiral conveyor with modular or flexible motorized chain (5, 20) for conveying objects between a loading point (50) and an unloading point (51) along a spiral-shaped guide (1) fixed to a supporting structure (2-4) is described. On a seal (13) inserted along said guide (1) a first series of bearings (8) on the upper part thereof and a second series of bearings (9) in its lower part thereof are mounted essentially parallel, said bearings (8-9) being adapted to rotationally cooperate with the chain during the outward step (10) and the return step (11) along the same track, and further reacting against the centripetal force of the chain (5) generated by its tensioning.

## Description

The present invention relates to a spiral conveyor with a conveyor chain having a return path along the same track of the outward path.

Currently, in case of conveying packages of any nature, e.g. in the food-processing, cosmetic, chemical and pharmaceutical fields, by overcoming ramps, the following systems are used:
- elevators
- upward segments with rubber-coated chain
- alpine conveyors
- wedge conveyors
- spiral systems.

These systems are usually inserted into more complex belt, slat, flat-, modular- or flexible-chain conveyor systems and have a specific using feature; however, each one has some limitations.

The elevator systems, excellent from the volume point of view, require the interruption of the product flow, obtained by means of stopping and singling systems appropriately managed by a control apparatus.

The upward segments with rubber-coated chain and alpine conveyors have modest slopes with a consequent increase of footprint.

The wedge conveyors drastically reduce the footprint and do not require any flow interruption systems but require the rotation of the conveyed object on its axis; furthermore, such systems require a gripping system which presses the packaging on the vertical segment. This condition may damage the packaging in some cases.

The currently marketed spiral systems provides for the return path of the chain or belt to occur separately from the outward path in order to reduce friction and thus the installed electric power. This solution however implies large volumes.

It is the object of the present invention to construct a chain conveyor means with a spiral path in which the chain return path occurs along the same track as the outward path.

In accordance with the invention, such an object is achieved by a spiral conveyor having a modular or flexible chain driven by a motor reducer for conveying objects from a loading point to an unloading point along a spiral-shaped guide fixed to a supporting structure, characterized in that the spiral outward and return paths of the chain occur on the same track described by said spiral guide on which a first series of bearings for the chain outward path is mounted to the top and a second series of bearings for the chain return path is mounted to the bottom, which are parallel and again spiralled, said bearings being internal with respect to an element of the chain with which they rotationally cooperate along both the outward and the return paths, and reacting against the centripetal force of the chain generated by its tensioning, i.e. towards the interior of the spiral.

The chain preferably includes a central or "nose" portion adapted to cooperate with the bearings arranged internally to said nose pushed inwards and thus towards the chain tensioning bearing.

"Outward path" means the path of the chain on which the object is conveyed between the loading point and the unloading point.

These and other features of the present invention will become further apparent from the following detailed description of a practical embodiment thereof, shown by way of non-limitative example in the accompanying drawings, in which:
figure 1 shows a front view of a spiral conveyor according to the present invention;

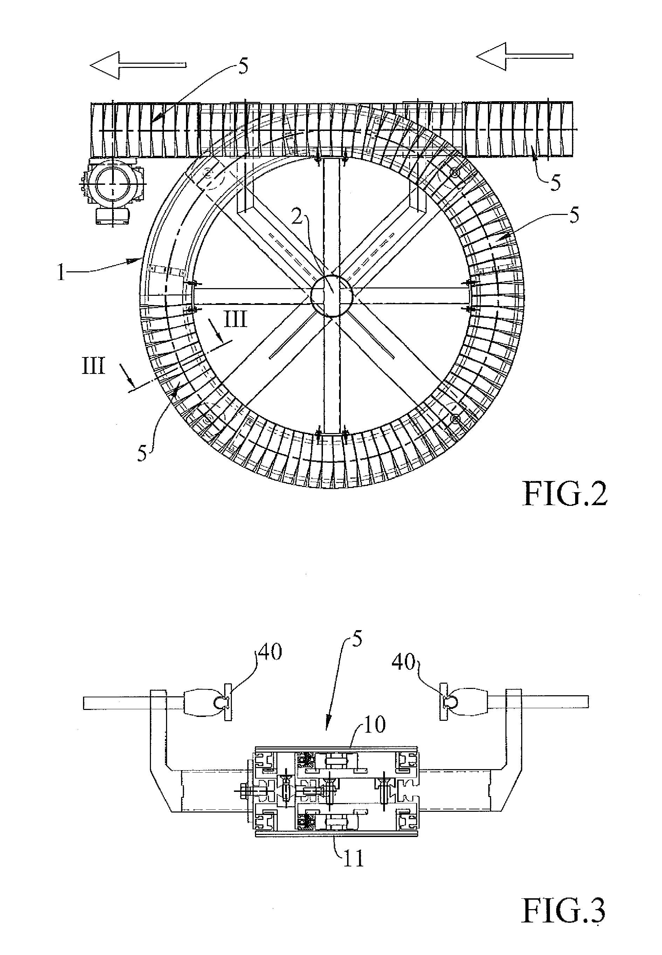

figure 2 shows a top plan view of the conveyor in figure 1;
figure 3 shows a sectional view taken along line III-III in figure 2;
figure 4 shows an enlarged portion of figure 3, with a flexible chain;
figure 5 shows a section similar to that of figure 4, but made with a modular chain;
figure 6 shows a side view of the guide of the spiral;
figure 7 shows a sectional view taken along line VII-VII in figure 6;
figure 8 shows a sectional view taken along line VIII-VIII in figure 6;
figure 9 shows a further embodiment according to the present invention.

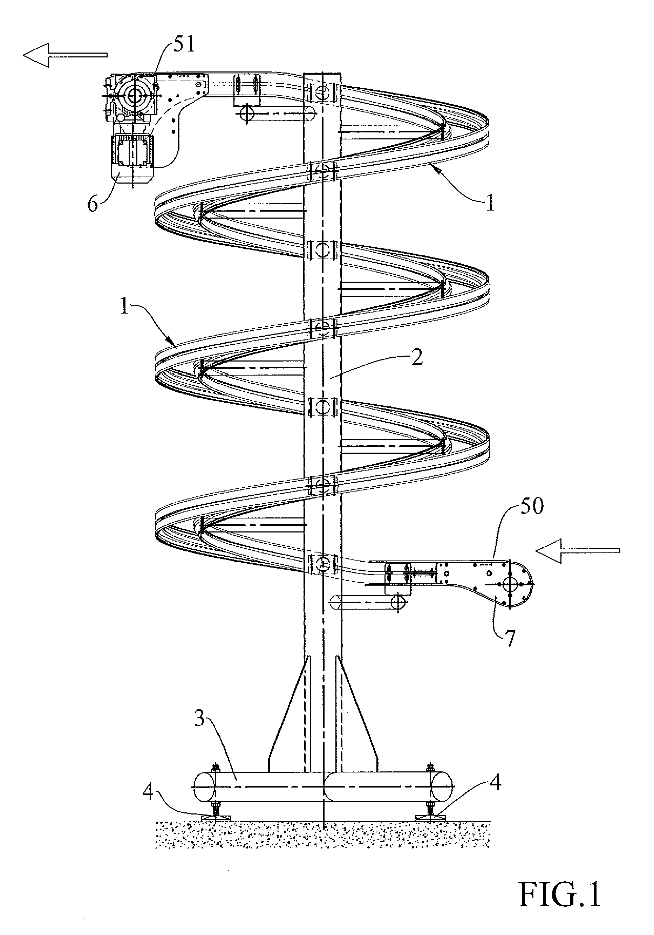

The conveyor in figure 1 includes a spiral guide consisting of a curved section or curved beam 1 made of aluminium fixed to an upright 2 resting on the ground by means of a base 3 with feet 4.

A single flexible or polivertebrated chain 5, driven by a motor reducer 6, runs along the guide 1.

The upper portion 10 is adapted to convey or to the outward path for packages or products to be packaged from a loading point 50 to an unloading point 51, the lower portion 11 to return the chain 5 from the unloading point 51 to the loading point 50.

The loading point 50 may be either up or down according to whether an object is intended to be carried downwards or vice versa.

The motor reducer 6 is to be installed at the unloading point 51, while the transmission 7 must be positioned at the loading point 50.

The return path of the chain 5 occurs along the same track or route as the outward path.

At the top, the guide 1 supports, again spiralled, a first series of consecutive internal ball bearings 8 (centre distance between the journals in the range between 25 and 35 mm, preferably 30 mm; noise increases when the centre distance is increased; there are mechanical limits when the centre distance is decreased) cooperating with the outward portion 10 of the chain 5, and at the bottom, a second series of consecutive internal ball bearings 9 cooperating with the return portion 11 of the chain 5.

The bearings 8-9 may be of the roller or even rolling type.

Said series of the bearings 8-9 are essentially parallel.

Preferably, the bearings 8-9 have an external diameter of 16 mm.

Each ball bearing 8-9 is supported by a seal 13.

The guide 1 supports further side seals 12 by means of side closing sections 60. Said side seals 12 are used only for centring, since they do not support any load of the chain 5.

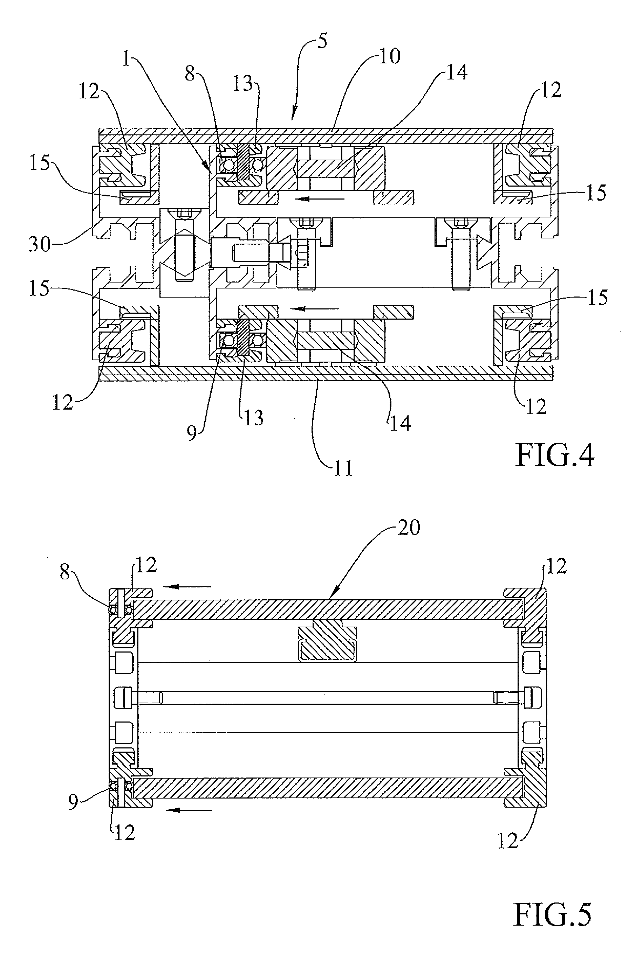

The flexible chain 5 (figure 4) includes a central portion or "nose" 14, which rotationally cooperates with the bearings 8-9, and "L"-shaped, side, centring portions 15 occasionally cooperating with the side seals 12 in case of minor side or rotational movements of the chain 5 (knocks, lifting and the like).

Figure 5 shows the case in which the conveyor chain is modular 20 instead of flexible 5. In this embodiment, the bearings 8-9 are directly supported by the internal side seals 12, without the need to insert a further central seal 13.

As clearly shown in the figures, the ball bearings 8-9 must necessarily be arranged in the internal part of the spiral with respect to the element, e.g. the nose 14, of the chain with which they cooperates so as to compensate for the centripetal or inward thrust of the chain in virtue of the tensioning system provided for driving the chain (see the arrows close to the bearings in figures 4 and 5).

The bearings 8-9 must therefore be positioned so as to be able to react against the centripetal force induced by tensioning the chain 5.

The chain 5, 20 always tends towards the interior of the curve, thus pushing the internal bearings 8, 9 towards the interior of the spiral (arrows in figures 4 and 5).

In the case of flexible chain 5, an additional seal 13 for the flexible conformation, i.e. for the central nose 14, is provided. However, the bearings 8-9 are even internal with respect to the nose 14.

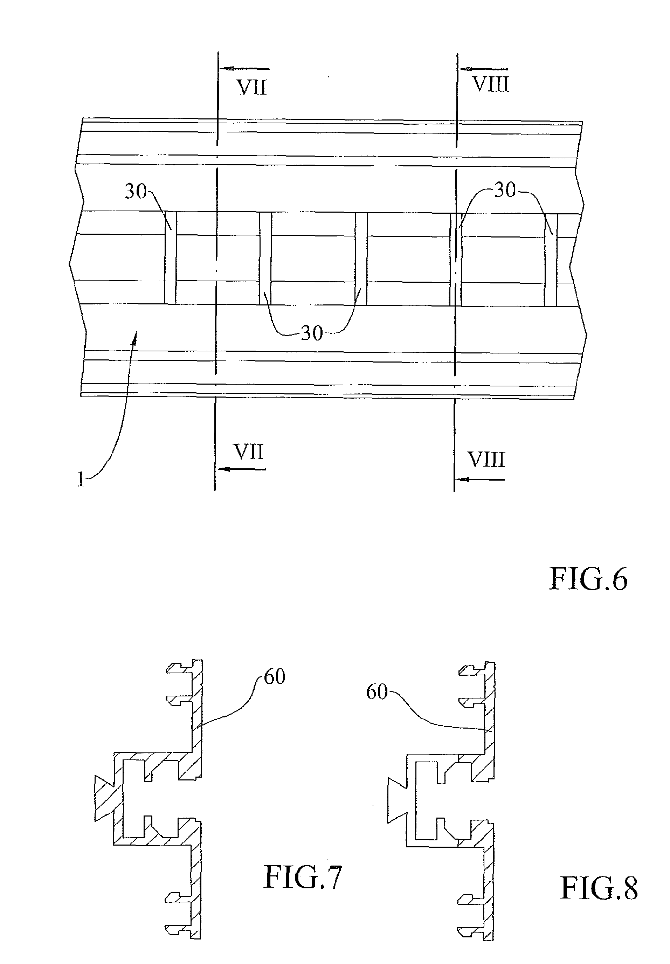

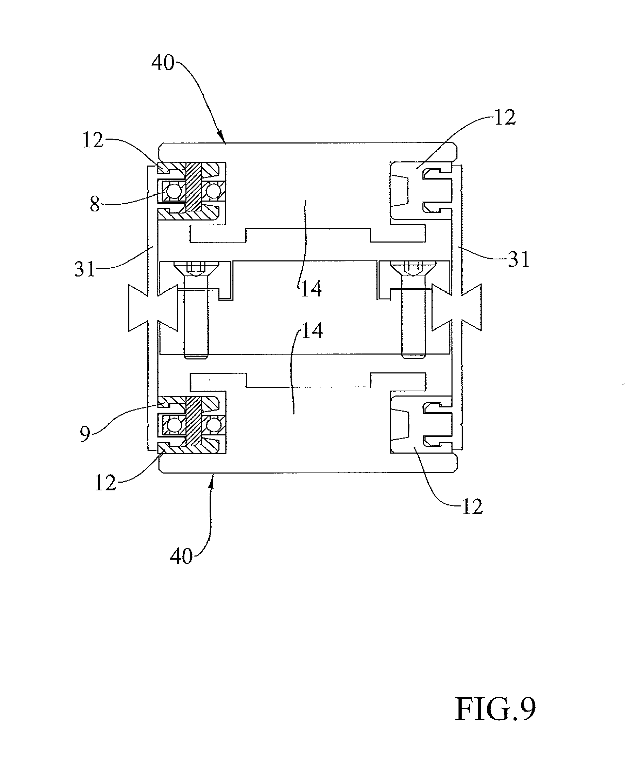

Figure 9 shows an embodiment of a chain 40 having side seals 12 only and a central nose 14 which extends between the two seals 12. As shown in the embodiment in figure 5, the internal bearings 8, 9 are directly supported by the internal side seals 12. Furthermore, it is worth noting two side closing sections 31 which are compacter than those shown in figures 7-8 and thus less cumbersome. This solution implies a greater stability of the chain 40 inside the guide 1.

The guide section 1 includes a plurality of notches or slits 30 (figures 6-8) to reduce the diameter of the spiral to the minimum, while maintaining an appropriate pitch.

The slits 30 are made on the back of the section 1 in order to allow a calendering with a very narrow radius (average diameter of centre distance of the spiral in the range between 500 and 1500 mm, preferably 500, 1000 and 1500 mm).

On the other hand, there is also the possibility of using a metal "C" which allows very narrow calendering radiuses; this solution is available also in stainless steel version for uses in aggressive environments.

In order to guarantee the accurate positioning on three axes (vertical axis, horizontal axis and rotation axis) of the spiral section supports, the supporting structure, made of either matte stainless steel or painted steel, is made by means of three-dimensional laser cutting.

The supporting structure may be made by means of structured sections of anodized aluminium.

With an appropriate use of flanks 40, it is possible to convey products of any shape, also on several parallel one-way routes.

Standard components are employed.

The conveyor according to the present invention has very small volumes, and guarantees a constantly synchronized motion with the upstream and downstream conveying systems.

The return path of the chain on the same track or route of the outward path ensures a certain safety from the accident-prevention point of view for the operators transiting very close to the spiral, as well as an easy maintainability and sanitation of the system (there are no additional protection guards in case of vertical chain return).

The solution suggested herein allows an overall reduction of chain friction, chain swerving (present in case of a free return), wear, use of electric energy and noise.

The bearing rolling system, in addition to give a considerable reduction of the friction with a consequent reduction of the installed electric power, guarantees a better chain centring, improving the load distribution and the advancement noise.

In the conveyor according to the present invention, the seals are only required for a correct centring, the sliding being thus occasional when a minor lifting of the chain occurs.

In the absence of internal bearings 8-9, i.e. without the technical solution suggested herein, a vertical return path of the chain must be provided in order to limit the energy lost by friction which would otherwise double, in addition to the other problems mentioned above.

## Claims

1. A spiral conveyor with modular or flexible chain (5, 20, 40) driven by a motor reducer for conveying objects between a loading point (50) and an unloading point (51) along a spiral-shaped guide (1) fixed to a supporting structure (2-4),
**characterized in that**
the spiral outward (10) and return (11) paths of the chain (5, 20, 40) occur along the same track described by said spiral guide (1) on which a first series of bearings (8) is mounted at the top for the outward path (10) of the chain (5, 20, 40) and a second series of bearings (9) is mounted at the bottom for the return path (11) of the chain (5, 20, 40), essentially parallel to each other and again spiralled,
said bearings (8-9) being internal with respect to an element (14) of the chain (5, 20, 40) with which they rotationally cooperate along both the outward path (10) and the return path (11), and reacting against the centripetal force of the chain (5, 20, 40) generated by its tensioning i.e. towards the interior of the spiral.

2. A conveyor according to claim 1, **characterized in that** said chain (5, 40) includes a nose (14) adapted to cooperate with the bearings (8, 9) arranged internally to said nose (14) which is pushed inwards and thus towards the bearing (8, 9) by tensioning the chain (5).

3. A conveyor according to claim 2, **characterized in that** it includes side seals (12) between which the internal bearings (8, 8) supported by central seals (13) are arranged.

4. A conveyor according to claim 2, **characterized in that** the nose (14) of the chain (5) extends from the internal bearings (8, 9) supported by the internal side seals (12) to the external side seals (12).

5. A conveyor according to claim 1, **characterized in that** the chain (20) internally and directly cooperates with the internal bearings (8, 9) directly supported by the internal side seals (12).

6. A conveyor according to anyone of the preceding claims, **characterized in that** the spiral-shaped guide (1) includes notches (30) in the internal part of the curve which are adapted to facilitate the forming and fastening of the spiral.

7. A conveyor according to anyone of the preceding claims, **characterized in that** the pitch or centre distance between the bearings (8-9) of each series is in the range between 25 and 35 mm, preferably equal to 30 mm.

8. A conveyor according to anyone of the preceding claims, **characterized in that** the diameter of the spiral is in the range between 500 and 1500 mm, preferably equal to 500, 1000 or 1500 mm.

9. A conveyor according to anyone of the preceding claims, **characterized in that** the chain (5, 40) includes side "L"-shaped portions occasionally cooperating with the seals (12, 13).
